# EUROPEAN PATENT APPLICATION

(11) **EP 1 990 746 A1**
(43) Date of publication of application: **12.11.2008**
(21) Application number: 08033516.9
(22) Date of filing: 10.04.2008
(51) Int. Cl.: G06F 17/30

(54) **Processing audio data**

(30) Priority: 11.05.2007 GB 0709079
(71) Applicant: Audiosoft Limited, Love Lane Cirencester Gloucestershire GL7 1YG (GB)
(72) Inventor: Rocca, Paul, Cheltenham, Gloucestershire, GL53 9AF (GB)
(74) Representative: Jones, Ithel Rhys

(57) **Abstract**

A method of processing audio data including obtaining (202) audio data; analysing (206) the audio data to determine at least one characteristic of the audio data; generating (206) data describing the at least one characteristic of the analysed audio data, and/or modifying (412) an audio recording process based on the at least one characteristic of the analysed audio data.

## Description

The present invention relates to processing audio data.

Audio signals are routinely recorded to computer storage in a variety of data formats, all of which are convolutions of, or can be converted into, a simple sequence of integer numbers that represent the amplitude of the waveform of the original audio sampled many thousands of times per second.

Data representing recorded audio is typically held in computer storage and analysed by human operators, who often have to listen to and skip through many hours of audio to find information. Operators may spend a large amount of time painstakingly evaluating audio that contains no useful data, or menially classifying and filing a signal for future use. The quality of the incoming audio itself can also be less than optimal, as the recording equipment is often configured manually and in isolation from the end users of the data.

Embodiments of the present invention are intended to address at least some of the above problems and use the available processing power of a computer system to analyse the incoming audio data and generate meta-data that can be used to feed back to the recording system so that the system can produce higher quality recordings. The meta-data can also be fed forward to inform human operators or further analysis software. The analysis can be performed in real time on one or more actively recording channels, or on a completed recording of any length.

According to a first aspect of the present invention there is provided a method of processing audio data including:
obtaining audio data;
analysing the audio data to determine at least one characteristic of the audio data;
generating data describing the at least one characteristic of the analysed audio data, and/or
modifying an audio recording process based on the at least one characteristic of the analysed audio data.

The data describing the at least one characteristic of the analysed audio data may be saved as meta-data associated with the audio data. The describing data can be displayed to a user, e.g. when accessing the analysing audio data.

The step of analysing the audio data can include generating an estimate of a signal to noise ratio of the audio data.

The step of analysing the audio data can include generating an estimate of a length of speech content in the audio data.

The method can further include transferring at least part of the analysed audio data to an automated transcription process (or saving meta-data indicating that the analysed audio data is suitable for such processing) if the estimated signal to noise ratio falls within a predefined range and the estimated speech content length falls within a predefined range. A "predefined range" can include a specific set of values, or it may include a series of values falling below an upper limit or above a lower limit (a threshold).

The method may further include transferring at least part of the analysed audio data to a language detection process (or saving meta-data indicating that the analysed audio data is suitable for such processing) or a keyword spotting process if the estimated speech content length falls within a predefined range.

The step of analysing the audio data can include detecting a region of clipping in the audio data. The method may further include adjusting a recording process or device to modify its gain, thereby reducing clipping, or indicating to an operator that this needs doing

The step of analysing the audio data can include detecting a region of silence in the audio data.

The step of analysing the audio data can include detecting a region of low amplitude in the audio data. The method may further include transferring at least part of the analysed audio data to a process for increasing its amplitude (or saving meta-data indicating that the analysed audio data is suitable for such processing). The method may further include adjusting a recording process or device to increase its recording amplitude.

The method may further include converting a format of the audio data.

The audio data may be obtained from an audio recording device in real time, or the audio data may be obtained from a data store. The audio data may be obtained from at least one channel of a multi-channel audio recording device. The audio data may be obtained from a plurality of channels and the analysing step may be performed on the plurality of obtained audio data in a parallel or serial manner. The method may include detecting a said inactive channel and ceasing to obtain audio data from the inactive channel, or switching to obtain audio data from another one of the channels, which may be based on another criteria such as time, sequence or meta-data from other sources. The obtained audio data may be a portion of a larger file/set of audio data.

According to another aspect of the present invention there is provided an audio data processing system including:
a device configured to obtain audio data;
a device configured to analyse the audio data to determine at least one characteristic of the audio data;
a device configured to generate data describing the at least one characteristic of the analysed audio data, and/or
a device configured to generate modify an audio recording process based on the at least one characteristic of the analysed audio data.

According to yet another aspect of the present invention there is provided a computer program product comprising computer readable medium, having thereon computer program code means, when the program code is loaded, to make the computer execute a method including steps of:
obtaining audio data;
analysing the audio data to determine at least one characteristic of the audio data;
generating data describing the at least one characteristic of the analysed audio data, and/or
modifying an audio recording process based on the at least one characteristic of the analysed audio data.

Whilst the invention has been described above, it extends to any inventive combination of the features set out above or in the following description. Although illustrative embodiments of the invention are described in detail herein with reference to the accompanying drawings, it is to be understood that the invention is not limited to those precise embodiments. As such, many modifications and variations will be apparent to practitioners skilled in this art. Furthermore, it is contemplated that a particular feature described either individually or as part of an embodiment can be combined with other individually described features, or parts of other embodiments, even if the other features and embodiments make no mention of the particular feature. Thus, the invention extends to such specific combinations not already described.

The invention may be performed in various ways, and, by way of example only, embodiments thereof will now be described, reference being made to the accompanying drawings, in which:
Figure 1 illustrates schematically a computer system configured to process audio data;
Figure 2 illustrates schematically steps performed by the computer system, including audio data analysing and collating steps;
Figure 3 illustrates schematically procedures involved in the audio data analysis;
Figure 4 illustrates schematically procedures involved in the collating, and
Figure 5 illustrates samples of different types of audio signals that can be processed.

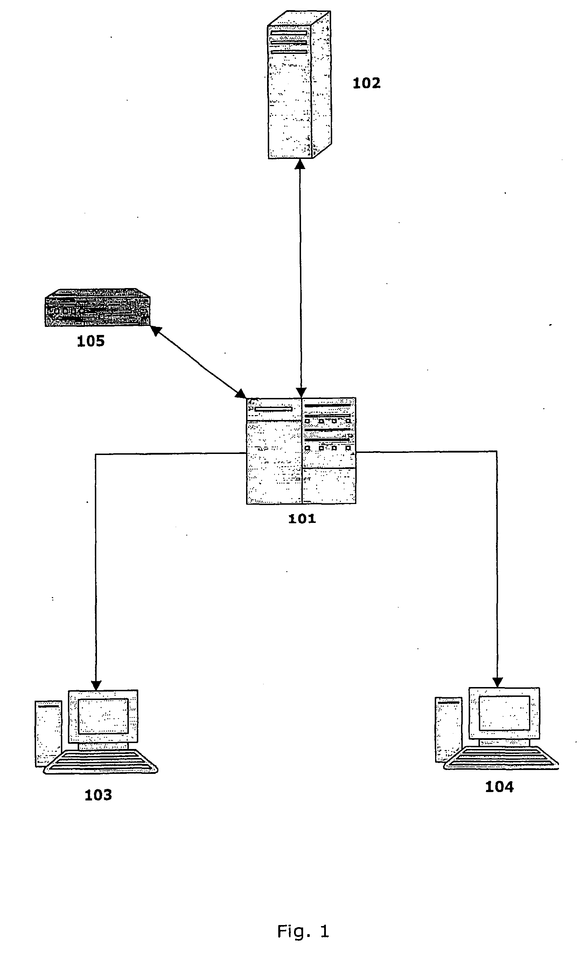

Figure 1 shows a computer system capable of processing audio data. The system comprises a first computer 101 that is configured to communicate with other components over a network, such as a standard Ethernet network. The first computer may be a standard PC or the like. The network also includes a second computer 102 that is configured to record and store audio signals from a source. The second computer can comprise an AudioPC^{™} system sold by Audiosoft Limited of Cirencester, Gloucestershire, United Kingdom. The audio source may comprise at least one digital or analogue audio input such as a telephone line or microphone. The data can originate from a wide range of different data sources. The second computer 102 comprises a number of recording channels that may be monitored for incoming audio. Completed recordings are written to the system disk of the computer in a compressed format, and are made available to other computers in the network.

The network further comprises a third computer 103 that is used by an operator to examine in detail audio data captured by the system. A fourth computer 104 is also included in the network, which is used by a supervisor who acts on information contained in the audio data.

The first computer 101 is associated with a database 105, which can either be an internal storage device within the computer 101, or an external store. The first computer 101 also contains code for executing the audio data process described herein. It will be appreciated that the arrangement of Figure 1 is exemplary only and variations are possible, e.g. the audio data process could be distributed over a plurality of computers, or divided into separate modules that run independently on different hardware components. Standard methods of inter-process communication (IPC) can be used to transfer data relating to the audio data processing between components of the network. In another embodiment, the audio data processing can be performed on the audio recording computer 102.

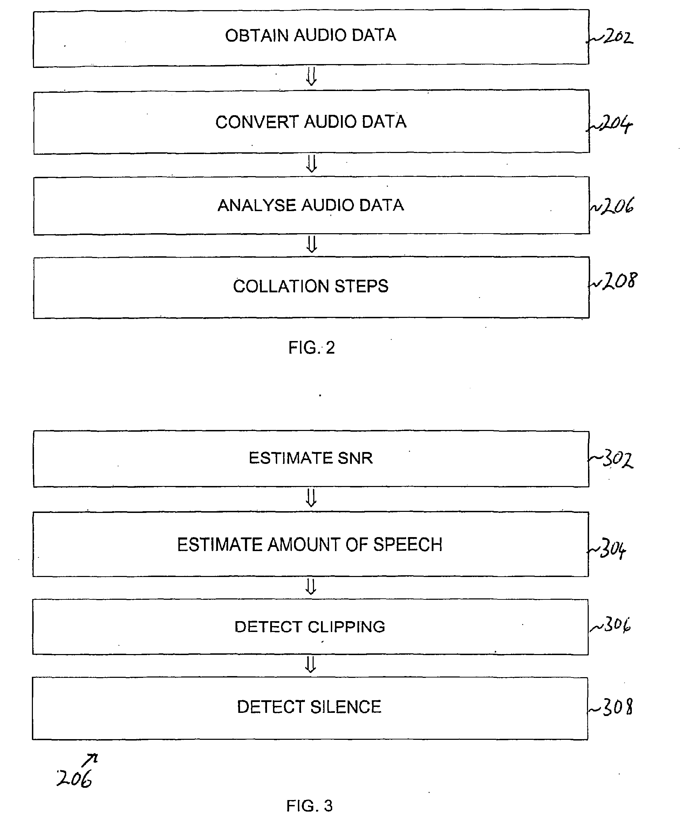

An example of steps involved in processing the audio data is shown in Figure 2. At step 202 the audio data is obtained. This can involve transferring data from the second computer 102, which records and stores the audio data, to the first computer 101. The process may be selective in terms of what audio data is obtained. For example, a subset of the channels of the recording computer 102 may be monitored and audio data may only be transferred from active channels. The process may switch channels if any particular channel in the set becomes inactive. The process may also switch channels based on other criteria such as time, sequence or meta-data obtained from other sources. If there are more active channels than the system is capable of monitoring concurrently in real time then a known prioritisation or load-distribution method would be employed to provide the best possible coverage of the channels. Several pieces of obtained audio data may be analysed by the process in a parallel or serial manner. Alternatively, the obtained audio data can comprise a completed recording. Further, the obtained audio data may be a portion of a larger file/set of audio data. For example, a single recording may be split into chunks of data to be analysed separately.

The audio data processing can be implemented by a set of processes that communicate with each other using IPC. Thus, when one process has finished with the data, it can alert at least one other process of this. For instance, when new audio data is obtained an audio data conversion process is alerted of this. The obtained audio data can then be loaded into the conversion process 204, which examines the format of the audio data and, if necessary, performs a decompression pass on the data and converts it into the raw audio format used by the subsequent analysis steps. The format used in the example is 16-bit PCM encoding at 8KHz. If no decompression or conversion is needed then step 204 can be omitted.

At step 206 analysis of the obtained audio data begins after the conversion process becomes inactive. The analysis process can involve running a set of different procedures on the audio data and examples of such procedures will be given below. The analysis step also generates meta-data that is stored and made available to the collating process.

After the analysis of the audio data, at step 208 a collation process receives the meta-data produced by the analysis process along with a reference to the audio data, and the analysis process becomes inactive. The collation process can use the meta-data in two main ways. First, the meta-data can be changed into a format suitable for sending to the recorder computer 102. The format will depend on the configuration of the system. In the example, the recorder process is hosted on a machine in the same network and the data can be sent in binary form using standard IPC methods. Second, the meta-data and a reference to the audio data are stored in database 105, which can be read by the recipient computer 104. As will be described below, depending on the content of the meta-data, the computer 104 may be used to apply further analysis processes to the audio data, or the meta-data may be displayed to/edited by a user using an user interface on the computer 104. The meta-data can be stored in such a way that allows searches to be performed to identify audio recordings that match certain user-defined criteria, e.g. allowing a user to locate audio data that has been identified as containing speech.

Referring to Figure 3, examples of the procedures that take place during the audio data analysis step 206 are shown. It will be appreciated that the procedures shown in the Figure are exemplary only and different ones could be applied. Further, the order of the procedures can vary and some may be omitted in other embodiments.

At step 302 algorithms that return an estimate of the signal to noise ratio (SNR) of the analysed audio data, in units of decibels, are executed. This could be based on the known Rainer-Martin algorithm.

At step 304 algorithms that return an estimate of the amount of speech present in the analysed audio data, in units of seconds, are executed. A number of different Voice Activity Detection (VAD) algorithms could be used, depending on the nature and type of the signals employed. Relatively general purpose ones have been proposed by Rosca et al and Srinivasan & Gersho.

At step 306 regions of clipping in the analysed audio data are detected using a simple Plateau detection algorithm, for example.

At step 308 regions of silence and/or low amplitude present in the analysed audio data are detected using simple thresholding techniques, for instance.

Meta-data indicating the results of the above steps (and thus describing characteristics of the audio data) is stored and made available to the collating process.

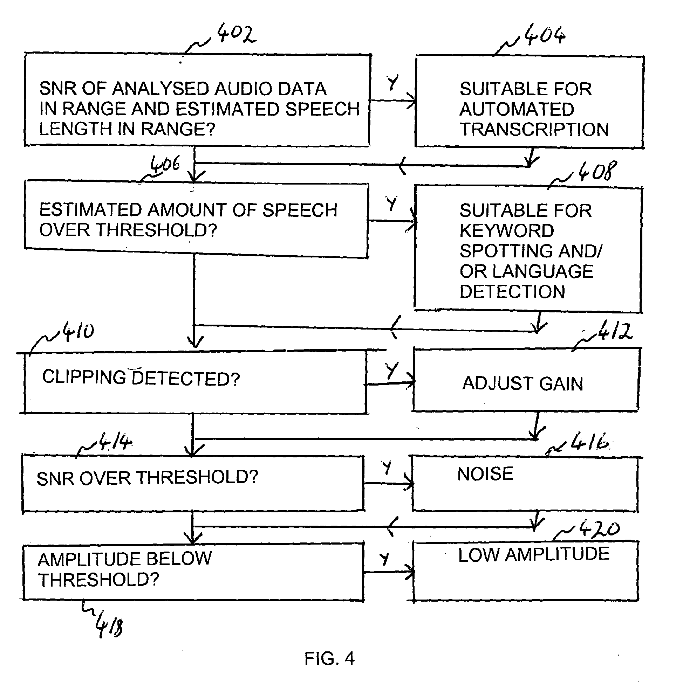

Referring to Figure 4, examples of steps that take place during the collating step 208 are shown. Again, it will be understood that the steps shown in the Figure are exemplary only. The collation process is intended to collate meta-data representing the results of the analysis, and produce statistics related to the analysis. It can also generate data that controls the audio recording process/computer 102.

At step 402, questions are asked whether the SNR of the analysed audio data falls within a certain range *such as "greater than 30dB"* and whether the estimated length of speech exceeds a certain threshold, e.g. 10 seconds. If both these questions are answered in the affirmative then at step 404 meta-data to be associated with the analysed audio data is set to indicate that the audio data is suitable for use with an automated transcription process.

Following step 402 or 404, control passes to step 406, where a question is asked whether the estimated amount of speech exceeds a certain threshold. If this question is answered in the affirmative then at step 408 meta-data to be associated with the analysed audio data is set to indicate that the audio data is suitable for use with a keyword spotting and/or language detection process.

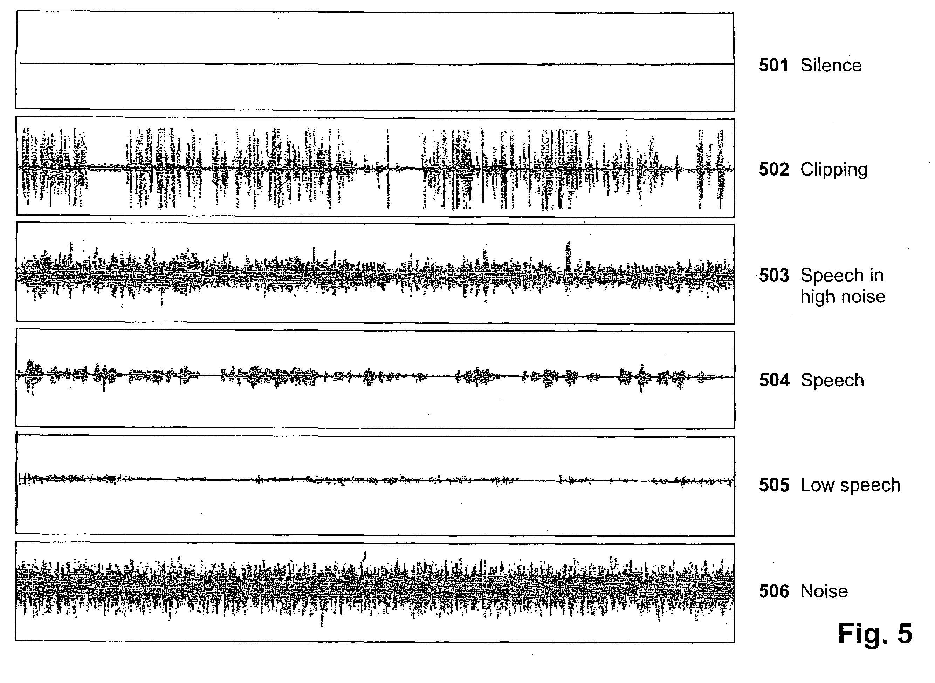

Following step 406 or 408, control passes to step 410, where a question is asked whether clipping was detected in the analysed audio data (e.g. sample signal 502 in Figure 5). If this question is answered in the affirmative then at step 412 data suitable for sending to the recording computer 102 is generated. This data contains an instruction to modify the settings of the recorder (e.g. change its gain) to reduce clipping in the audio it captures or prompt an operator to do so. In an alternative embodiment, such an instruction can be transferred when the analysis detects clipping.

Following step 410 or 412, control passes to step 414, where a question is asked whether the SNR of the analysed audio data is lower than a certain threshold eg peak SNR measured is <15dB. This is indicative that the audio only contains noise (e.g. signal 506). If this is the case then at step 416, meta-data to be associated with the analysed audio data is set to indicate that the audio data contains noise.

Following step 414 or 416, control passes to step 418, where a question is asked whether the amplitude of the analysed audio data is below a certain threshold indicative that the audio is quiet, e.g. average signal level is < -20dBV. If this is the case then at step 420 data suitable for sending to the recording computer 101 is generated. This data contains an instruction to modify the settings of the recorder (e.g. change its recording gain or switch on a filter or the like) to increase the amplitude of future recordings. In an alternative embodiment, such an instruction can be transferred when the analysis detects audio of low amplitude. In yet another embodiment, a user could be prompted to adjust the recorder.

Other possibilities of the steps that can be performed by the collating process include: detecting meta-data indicating a long period of silence in the analysed audio data (e.g. signal 501) and then associating the audio data with meta-data indicating that it is silent; the SNR estimate indicating a speech signal with a lower SNR estimate due to the presence of noise (e.g. signal 503), which can be labelled with meta-data indicating a noisy speech signal; detection of a signal such as sample 504 that contains only speech with occasional silent interludes, in which case the process would label with meta-data indicating speech with a high SNR estimate, and the SNR estimate meta-data indicating speech with a low SNR estimate due to the small background noise component present, which is relatively significant to a recording with such low amplitude, e.g. sample 505. Further uses that can be made of the meta-data produced by the analysis of the audio data can include modifying the audio data itself, e.g. applying noise reduction, silence removal, amplification, speed and/or pitch adjustment steps.

## Claims

1. A method of processing audio data including:
obtaining (202) audio data;
analysing (206) the audio data to determine at least one characteristic of the audio data;
generating (206) data describing the at least one characteristic of the analysed audio data, and/or
modifying (412) an audio recording process based on the at least one characteristic of the analysed audio data.

2. A method according to claim 1, wherein the data describing the at least one characteristic of the analysed audio data is saved (206) as meta-data associated with the analysed audio data.

3. A method according to claim 1 or 2, wherein the step of analysing the audio data includes generating (302) an estimate of a signal to noise ratio of the audio data.

4. A method according to any one of the preceding claims, wherein the step of analysing the audio data includes generating an estimate (304) of a length of speech content in the audio data.

5. A method according to claim 4, when dependent upon claim 3, further including transferring at least part of the analysed audio data to an automated transcription process (or saving meta-data indicating that the analysed audio data is suitable for such processing) if the estimated signal to noise ration falls within a predefined range and the estimated speech content length falls within a predefined range.

6. A method according to claim 4 or 5, further including transferring at least part of the analysed audio data to a language detection process or a keyword spotting process (or saving meta-data indicating that the analysed audio data is suitable for such processing) if the estimated speech content length falls within a predefined range.

7. A method according to any one of the preceding claims wherein the step of analysing the audio data includes detecting (306) a region of clipping in the audio data.

8. A method according to claim 7, further including adjusting (412) a recording process or device to modify its gain (or saving meta-data indicating that the analysed audio data is suitable for such processing).

9. A method according to any one of the preceding claims, wherein the step of analysing the audio data includes detecting (308) a region of silence in the audio data.

10. A method according to any one of the preceding claims, wherein the audio data is obtained from an audio recording device (102) in real time.

11. A method according to claim 10, wherein the audio data is obtained from at least one channel of a multi-channel audio recording device (102).

12. A method according to claim 11, wherein the audio data is obtained from a plurality of the channels and the analysing step (206) is performed on the plurality of obtained audio data in a parallel or serial manner.

13. A method according to claim 12, including detecting a said inactive channel and ceasing obtaining the audio data from the inactive channel, or switching to obtain audio data from another one of the channels that is active.

14. An audio data processing system including:
a device (102) configured to obtain audio data;
a device (101) configured to analyse the audio data to determine at least one characteristic of the audio data;
a device configured to generate data describing the at least one characteristic of the analysed audio data, and/or
a device configured to generate modify an audio recording process based on the at least one characteristic of the analysed audio data.

15. A computer program product comprising computer readable medium, having thereon computer program code means, when the program code is loaded, to make the computer execute a method including steps of:
obtaining (202) audio data;
analysing (206) the audio data to determine at least one characteristic of the audio data;
generating data describing the at least one characteristic of the analysed audio data, and/or
modifying (412) an audio recording process based on the at least one characteristic of the analysed audio data.
